# EUROPEAN PATENT APPLICATION

(11) **EP 4 841 720 A1**
(43) Date of publication of application: **18.11.2026**
(21) Application number: 25738926.2
(22) Date of filing: 10.01.2025
(51) Int. Cl.: H01M 4/96, B01J 23/42, C01B 32/05, H01M 4/90, H01M 8/10, H01M 4/88

(54) **POROUS CARBON FOR FUEL CELL CATALYST SUPPORT, FUEL CELL CATALYST, AND FUEL CELL**

(30) Priority: 12.01.2024 JP 2024003397
(71) Applicant: Kuraray Co., Ltd., Kurashiki-shi, Okayama 710-0801 (JP)
(72) Inventor: KAMAE, Yoshiki, Kurashiki-shi, Okayama 710-0801 (JP); KOBAYASHI, Shohei, Kurashiki-shi, Okayama 710-0801 (JP); NISHIUMI, Kosuke, Kurashiki-shi, Okayama 710-0801 (JP); ITO HAYASHI, Akari, Fukuoka-shi, Fukuoka 819-0395 (JP)
(74) Representative: Müller-Boré & Partner Patentanwälte PartG mbB
(86) International application number: PCT/JP2025/000654
(87) International publication number: WO 2025/150559

(57) **Abstract**

The present invention relates to porous carbon for a fuel cell catalyst carrier, wherein a slope of an approximate straight line obtained by converting a change in pressure of nitrogen until reaching an adsorption equilibrium at each prescribed relative pressure in measurement of a nitrogen adsorption isotherm into a mass transfer coefficient using LDF approximation and linearly approximating a relationship between a relative pressure and a mass transfer coefficient at a relative pressure of 1.0 × 10⁻⁴ or more and 1.0 × 10⁻³ or less is 2.5 or more.

## Description

### TECHNICAL FIELD

The present invention relates to porous carbon for a fuel cell catalyst carrier, a fuel cell catalyst comprising the porous carbon and a catalytic metal, and a fuel cell comprising the catalyst.

### BACKGROUND ART

As a catalyst for an oxidation reaction occurring in an anode and a reduction reaction occurring in a cathode in a fuel cell, a metal, an alloy or the like, mainly, platinum or a platinum alloy, which has a high reaction activity, is used. As a support for carrying the catalytic metal, a carbon material, specifically, porous carbon is commonly used.

For example, Patent Document 1 describes, as a catalyst carrier for a polymer electrolyte fuel cell, a porous carbon material having a specific surface area of mesopores (pores having a pore diameter of 2 to 50 nm) of 600 to 1600 m²/g and having a specific intensity ratio of a G-band and a G'-band in a Raman spectroscopic spectrum and a specific G' -band peak position.

### PRIOR ART DOCUMENT

### PATENT DOCUMENT

Patent Document 1: WO 2015/141810 A

### SUMMARY OF THE INVENTION

### PROBLEMS TO BE SOLVED BY THE INVENTION

In a catalyst carrier on the cathode side in a fuel cell, due to a phenomenon in which water molecules moving along with protons from the anode side toward the cathode side and water vapor generated by a reduction reaction on the cathode side remain in a catalyst layer, diffusion and supply of a reactant (that is, oxygen gas) to the catalyst layer become insufficient, and the output of the fuel cell declines. The voltage drop loss due to the above phenomenon is referred to as concentration overvoltage, and the concentration overvoltage causes a decline in the output of the fuel cell. Therefore, to improve the output performance of the fuel cell, it is important to cause a low concentration overvoltage by improving the gas diffusibility in the catalyst carrier, suppressing the above phenomenon, and supplying the reactant gas to the electrode. According to studies by the present inventors, the porous carbon material for a polymer electrolyte fuel cell described in Patent Document 1 has a dendritic structure for improving gas diffusibility, and has a relatively large specific surface area of mesopores in order to efficiently support catalytic metal particles. However, further improvement of the output performance of a fuel cell is always required.

The present invention has been devised in view of the above circumstances, and a challenge of the present invention is to provide porous carbon for a fuel cell catalyst carrier, the porous carbon being capable of suppressing the above phenomenon and providing a low concentration overvoltage when used as a catalyst carrier in a fuel cell.

### SOLUTIONS TO THE PROBLEMS

The present inventors conducted detailed studies on porous carbon to solve the above problems, and have accomplished the present invention. That is, the present invention includes the following preferred embodiments.
[1] Porous carbon for a fuel cell catalyst carrier, wherein a slope of an approximate straight line obtained by converting a change in pressure of nitrogen until reaching an adsorption equilibrium at each prescribed relative pressure in measurement of a nitrogen adsorption isotherm into a mass transfer coefficient using LDF approximation and linearly approximating a relationship between a relative pressure and a mass transfer coefficient at a relative pressure of 1.0 × 10⁻⁴ or more and 1.0 × 10⁻³ or less is 2.5 or more.
[2] The porous carbon according to [1], wherein a pore volume of pores having a pore diameter of 2 nm or more and 200 nm or less calculated from the nitrogen adsorption isotherm by the BJH method is 0.8 cm³/g or more.
[3] The porous carbon according to [1] or [2], wherein a mass transfer coefficient at a relative pressure of 1.0 × 10⁻³ is 3.0 × 10⁻³ sec⁻¹ or more on the approximate straight line.
[4] The porous carbon according to any one of [1] to [3], wherein an average primary particle diameter is 500 nm to 5 µm.
[5] The porous carbon according to any of [1] to [4], wherein the porous carbon has a bulk density of less than 0.10 g/cm³.
[6] A fuel cell catalyst comprising the porous carbon according to any one of [1] to [5] and a catalytic metal, wherein the porous carbon carries the catalytic metal.
[7] A fuel cell comprising the fuel cell catalyst according to [6].

### EFFECTS OF THE INVENTION

According to the present invention, it is possible to provide porous carbon for a fuel cell catalyst carrier, the porous carbon being capable of providing a low concentration overvoltage when used as a catalyst carrier in a fuel cell.

### BRIEF DESCRIPTION OF THE DRAWINGS

[Fig. 1] Fig. 1 is a graph showing a relationship between a relative pressure and a mass transfer coefficient of the porous carbon in Example 1.
[Fig. 2] Fig. 2 is a diagram illustrating a relationship between an I-V characteristic and each overvoltage in a fuel cell.
[Fig. 3] Fig. 3 is a graph showing an I-V curve in Example 1.
[Fig. 4] Fig. 4 is a graph showing a Tafel plot and a regression line thereof in Example 1.

### DETAILED DESCRIPTION

Hereinafter, embodiments of the present invention will be described in detail. It is noted that the following is a description that exemplifies embodiments of the present invention, and the present invention is not intended to be limited to the following embodiments.

### [Porous carbon]

The porous carbon for a fuel cell catalyst carrier of the present invention is characterized in that in the measurement of the nitrogen adsorption isotherm of the porous carbon, the change in pressure of nitrogen until the adsorption equilibrium is reached at each prescribed relative pressure (P/P₀) is converted into a mass transfer coefficient using a linear driving force (LDF) approximation, the relationship between a relative pressure and a mass transfer coefficient at a relative pressure of 1.0 × 10⁻⁴ or more and 1.0 × 10⁻³ or less is linearly approximated, and the slope of the approximate straight line obtained thereby is 2.5 or more. Here, P is an adsorption equilibrium pressure, and P₀ is a saturated vapor pressure.

### <Relationship between mass transfer coefficient and relative pressure, and mass transfer coefficient>

The mass transfer coefficient of porous carbon is an index representing the speed of movement when a reactant gas (for example, oxygen) and a product gas (for example, water vapor) in the porous carbon for a fuel cell catalyst move in the porous carbon. As the change in the mass transfer coefficient with respect to the change in the relative pressure is larger, the reactant gas can smoothly move from mesopores to micropores, and the product gas can smoothly move from the micropores to the mesopores. In addition, the larger the mass transfer coefficient is, the larger the migration speed of the reactant gas and the product gas in the pores of the porous carbon is. Therefore, the change in the mass transfer coefficient with respect to the change in the relative pressure and the mass transfer coefficient serve as indices of gas diffusibility in the porous carbon. Here, in accordance with IUPAC, micropores refer to pores having a diameter of less than 2 nm, and mesopores refer to pores having a diameter of 2 to 50 nm.

The relationship between the relative pressure and the mass transfer coefficient, and the mass transfer coefficient can be examined by letting porous carbon adsorb nitrogen gas at -196°C, producing an adsorption isotherm, and analyzing the adsorption isotherm. Specifically, for example, as described in Examples described later, an adsorption isotherm of nitrogen of porous carbon is produced, and a change in pressure of nitrogen until reaching an adsorption equilibrium at each prescribed relative pressure is converted into a mass transfer coefficient using LDF approximation. Next, by producing a graph with the relative pressure on the x-axis and the mass transfer coefficient on the y-axis, the relationship between the relative pressure and the mass transfer coefficient can be expressed.

The present inventors have found that, in this graph, when the slope of an approximate straight line drawn in a relative pressure range of 1.0 × 10⁻⁴ or more and 1.0 × 10⁻³ or less [in the present description, this slope may be referred to as (a)] is 2.5 or more, the porous carbon can exhibit excellent gas diffusibility.

Here, the reason the range of the relative pressure is set to 1.0 × 10⁻⁴ or more and 1.0 × 10⁻³ or less will be described. In the present description, pores having a diameter of approximately 2 to 200 nm are assumed as a diffusion path of the reactant gas and the product gas diffusing into porous carbon, for example, oxygen or water vapor. When the relative pressure is excessively low, that is, when the relative pressure is less than 1.0 × 10⁻⁴, it is considered that the diffusion behavior in pores smaller than such pores effectively acting as a migration path of the reactant gas and the product gas is reflected in the mass transfer coefficient. On the other hand, when the relative pressure is excessively high, that is, when the relative pressure is higher than 1.0 × 10⁻³, it is considered that the diffusion behavior in pores larger than such pores effectively acting as a migration path of the reactant gas and the product gas is reflected in the mass transfer coefficient. By setting the relative pressure to 1 × 10⁻⁴ or more and 1.0 × 10⁻³ or less, it is considered that a region where the diffusion behavior of the reactant gas and the product gas assumed in the present description is reflected in the mass transfer coefficient can be evaluated, and the slope of the approximate straight line in this range can be used as one of the indices of the gas diffusibility.

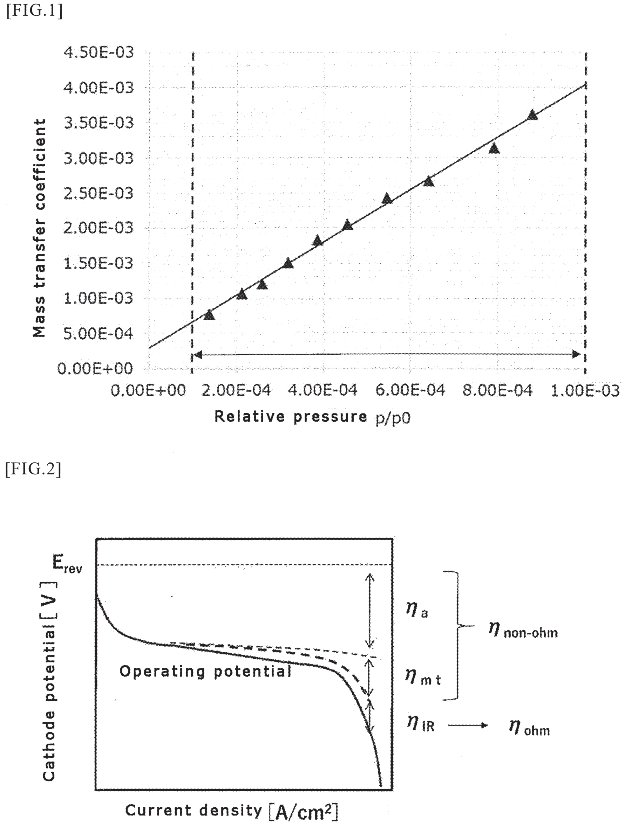

A more specific method for determining the (a) will be described using a graph showing a relationship between the relative pressure and the mass transfer coefficient of the porous carbon of Example 1 described later shown in Fig. 1.

First, an approximate straight line is drawn in a relative pressure range of 1.0 × 10⁻⁴ or more and 1.0 × 10⁻³ or less (in Fig. 1, this range is shown by a broken line and an arrow) in a graph showing the relationship between the relative pressure and the mass transfer coefficient, produced as described in Examples described later. Next, the slope (a) of the approximate straight line is determined.

(a) is 2.5 or more, and usually is, but is not limited to, 10.0 or less. (a) is preferably 2.5 to 10.0, 3.0 to 7.0, or 3.5 to 5.0. When (a) is equal to or more than the lower limit value, the porous carbon tends to have a pore structure suitable for diffusion of a reactant gas and discharge of a product gas when used as a catalyst carrier of a fuel cell, and therefore excellent gas diffusibility can be exhibited. In addition, when (a) is equal to or more than the lower limit value, the porous carbon can have many mesopores. When (a) is less than 2.5, it is difficult for the porous carbon to exhibit excellent gas diffusibility.

The mass transfer coefficient attained when the relative pressure of the approximate straight line in the above range is 1.0 × 10⁻³ [in the present description, the value of this mass transfer coefficient may be referred to as (b)] is preferably 3.0 × 10⁻³ sec⁻¹ or more, and usually is, but is not limited to, 1.0 × 10⁻² sec⁻¹ or less. (b) is more preferably 3.0 × 10⁻³ to 1.0 × 10⁻² sec⁻¹, 3.5 × 10⁻³ to 8.0 × 10⁻³ sec⁻¹, or 4.0 × 10⁻³ to 6.0 × 10⁻³ sec⁻¹. When (b) is equal to or more than the lower limit value, the porous carbon tends to have a pore structure suitable for diffusion of a reactant gas and discharge of a product gas, and therefore excellent gas diffusibility can be exhibited. With reference to the graph shown in Fig. 1, it is described that the (b) is a mass transfer coefficient at a relative pressure of 1.0 × 10⁻³ (the right broken line or the right end of the arrow).

The above-described "pore structure suitable for diffusion of a reactant gas and discharge of a product gas" is considered to be a pore structure in which there are many pores that effectively act as a migration path of the reactant gas and the product gas, openings of such pores have dimensions suitable for entering and exiting of the reactant gas and the product gas, a proportion of pores communicating from the opening at one end to the opening at the other end (namely, pores having an opening at one end and not closed at the other end) is high, there are few structures that hinder the migration of the reactant gas and the product gas in the communication portion (for example, a bottleneck or the like), and a migration path of gas (a migration path for discharging a product gas unnecessary for chemical reactions in a fuel cell and supplying a reactant gas necessary for the chemical reactions onto a catalytic metal carried on the porous carbon) is relatively short. Therefore, the pore structure of the porous carbon of the present invention is distinguished from a pore structure in which there are many structures that hinder the migration of the reactant gas and the product gas (for example, a bottleneck or the like) that have a relatively long path through which the reactant gas and the product gas migrate in the porous carbon and that correspond to regions among the template particles having been present or gaps among template particles having been continuously present like a "three-dimensional network structure" (see, for example, JP-A-2011-1224) formed of gaps generated by mixing a carbon source and template particles (pore source), carbonizing the mixture, and removing the aggregated and connected template particles (namely, continuous pores generated by removing the template particles having been present) and a carbon skeleton surrounding the gaps. Therefore, the "three-dimensional network structure" does not satisfy the numerical range(s) of (a) and/or (b) in the porous carbon of the present invention. In addition, the pore structure of the porous carbon of the present invention is distinguished from a pore structure in which there are many structures that hinder the migration of the reactant gas and the product gas (for example, a bottleneck or the like) that have a relatively long path through which the reactant gas and the product gas migrate in the porous carbon and that correspond to regions among the template particles having been present or gaps among template particles having been continuously present like a "three-dimensional dendritic structure" (see, for example, JP-A-2018-174078) formed of a dendritic form having a three-dimensional structure in which a rod-like body or a cyclic body containing carbon is three-dimensionally branched. Therefore, the "three-dimensional dendritic structure" does not satisfy the numerical range(s) of (a) and/or (b) in the porous carbon of the present invention. In one preferred embodiment of the present invention, it is considered that all the pores communicate from the opening at one end to the opening at the other end.

In addition, the above (a) is considered to correspond to the length of a path through which the reactant gas migrates for being supplied to the porous carbon and the product gas migrates for being discharged from the porous carbon, and the larger the (a) is, the shorter the length of the path is considered to be. The (b) is considered to correspond to the amount of the structure that hinders the migration of the reactant gas and the product gas in the communication portion, and the larger the (b) is, the smaller the amount of the structure that hinders the migration of the reactant gas and the product gas is considered to be.

The porous carbon having the (a) of equal to or more than the lower limit value described above can be produced, for example, by subjecting a mixture in which a carbon source and a pore source are mixed in a highly compatible state to phase separation by heat treatment, then carbonizing the mixture to fix the phase separation structure, and removing the pore source from the resulting carbonized product. For example, in the method for producing porous carbon described later, the (a) can be adjusted to be equal to or more than the lower limit value or to within the above range by appropriately adjusting the temperature and time for heat-treating a mixture of a carbon source and a calcium compound to be a pore source, or by appropriately adjusting the temperature and time for heat-treating the mixture while changing the type of the carbon source. In addition, the (b) also can be adjusted to be equal to or more than the lower limit value or to within the above range by appropriately adjusting the same conditions.

### <Pore volume of pores having pore diameter of 2 nm or more and 200 nm or less>

In the porous carbon, the lower limit value of the pore volume of pores having a pore diameter of 2 nm or more and 200 nm or less (hereinafter, it may be referred to as a "volume of pores sized 2 nm or more and 200 nm or less") calculated from a nitrogen adsorption isotherm by a BJH method is preferably 0.8 cm³/g or more, and the upper limit value is not particularly limited, but is usually 4.00 cm³/g or less. The volume of pores sized 2 nm or more and 200 nm or less is preferably 0.80 to 4.00 cm³/g, more preferably 0.90 to 3.90 cm³/g, still more preferably 1.00 to 3.80 cm³/g, further preferably 1.30 to 3.70 cm³/g, particularly preferably 1.60 to 3.60 cm³/g, more particularly preferably 1.90 to 3.50 cm³/g, extremely preferably 2.00 to 3.40 cm³/g, and more extremely preferably 2.20 to 3.30 cm³/g. The pores sized 2 nm or more and 200 nm or less are considered to be involved in diffusion of the reactant gas and the product gas and carrying of the catalytic metal on the porous carbon in a highly dispersed state. The highly dispersed state is a state in which the catalytic metal is dispersed at an appropriate distance and carried on the porous carbon. If the spatial distribution of the catalytic metal in the porous carbon is sparse to some extent, the water vapor production amount per unit volume of the porous carbon can be reduced, and the oxygen consumption rate per unit volume of the porous carbon can be reduced, so that the oxygen gas can be efficiently diffused and supplied, and the water vapor can be efficiently discharged. In general, an oxidation reaction and a reduction reaction in a fuel cell occur on a catalytic metal. Therefore, from the viewpoint of enhancing the utilization efficiency of a catalyst, the catalytic metal generally has a size of about several nm (for example, an average particle size of 2 to 3 nm) in order to increase the specific surface area per mass. Therefore, when the volume of pores sized 2 nm or more and 200 nm or less is equal to or more than the lower limit value, the catalytic metal can be carried on the porous carbon in a highly dispersed state, and good discharge of the product gas and smooth supply of the reactant gas can be achieved.

The volume of pores sized 2 nm or more and 200 nm or less can be adjusted to equal to or more than the lower limit value and equal to or less than the upper limit value, or to within the above range by, for example, appropriately adjusting the types and/or the proportions of the carbon source and the calcium compound, or the temperature and/or the time of the heat treatment step (phase separation step and/or carbonization step) in the method for producing porous carbon described later. The volume of pores sized 2 nm or more and 200 nm or less can be calculated by analyzing a nitrogen adsorption isotherm of the porous carbon by the BJH method, and can be determined, for example, by the method described in Examples described later.

### <Mode diameter>

In the porous carbon, the mode diameter of pores calculated from a nitrogen adsorption isotherm by the BJH method (hereinafter, it may be simply referred to as a "mode diameter") may be, for example, 2 to 200 nm, 5 to 190 nm, or 10 to 180 nm depending on the size of the catalytic metal to be carried. Herein, the "mode diameter" means a pore diameter having the largest appearance ratio in a logarithmic differential pore volume distribution [dV/d(log D)] obtained by differentiating the cumulative pore volume (V) with the common logarithm of the pore diameter (D). When the mode diameter is equal to or less than the upper limit value, good utilization efficiency of the catalyst carried can be achieved. As the mode diameter is smaller, the porous carbon can carry the catalytic metal better in a highly dispersed state, and as the mode diameter is larger, the porous carbon tends to be better in gas diffusibility.

The mode diameter can be adjusted to within the above range by, for example, appropriately adjusting the types and/or the proportions of the carbon source and the calcium compound, or the temperature and/or the time of the heat treatment step (phase separation step and/or carbonization step) in the method for producing porous carbon described later. The mode diameter can be calculated by analyzing a nitrogen adsorption isotherm of porous carbon by the BJH method, and can be determined, for example, by the method described in Examples described later.

### <Bulk density>

The bulk density in porous carbon indicates the degree of development of a pore structure. When the pore volumes of pores having a pore diameter of 2 nm or more and 200 nm or less are equivalent, the pore volume having a pore diameter of more than 200 nm is larger as the bulk density is lower. It is considered that pores having a pore diameter of 2 nm or more and 200 nm or less contribute to the migration of the reactant gas and the product gas and carrying of the catalytic metal on the porous carbon in a highly dispersed state, whereas pores having a pore diameter of more than 200 nm play a role of an entrance or a migration path for the reactant gas, the product gas and the catalytic metal to smoothly migrate into pores having a pore diameter of 2 nm or more and 200 nm or less. Therefore, it is preferable that in addition to the pore volume of pores having a pore diameter of 2 nm or more and 200 nm or less, the pore volume of pores having a pore diameter of 200 nm or more is also large, that is, the bulk density is small.

In one preferred embodiment, the bulk density of the porous carbon is preferably less than 0.10 g/cm³, and the lower limit is not particularly limited, but is usually 0.001 g/cm³ or more. The bulk density of the porous carbon is preferably 0.001 to less than 0.10 g/cm³, more preferably 0.004 to 0.08 g/cm³, still more preferably 0.008 to 0.06 g/cm³, and particularly preferably 0.01 to 0.05 g/cm³. When the bulk density is less than the upper limit value or equal to or less than the upper limit value, the reactant gas and the product gas can smoothly migrate into the inside of the pores having a pore diameter of 2 nm or more and 200 nm or less, and as a result, excellent gas diffusibility is easily exhibited. When the bulk density is equal to or more than the lower limit value, scattering can be inhibited and handleability can be improved during the use of the porous carbon as a catalyst carrier.

The bulk density can be adjusted to less than the upper limit value or to within the above range by, for example, appropriately adjusting the types and/or the proportions of the carbon source and the calcium compound, or the temperature and/or the time of the heat treatment step (phase separation step and/or carbonization step) in the method for producing porous carbon described later.

The bulk density can be measured by the method described in Examples described later.

### <Pore volume of pores having pore diameter of less than 2 nm>

In one preferred embodiment, the pore volume of pores having a pore diameter of less than 2 nm calculated from a nitrogen adsorption isotherm of the porous carbon by the DFT method is preferably 0.35cm³/g or less, and the lower limit value thereof is not particularly limited, but is preferably 0.01cm³/g or more. The pore volume of pores having a pore diameter of less than 2 nm is preferably 0.01 to 0.35cm³/g, more preferably 0.02 to 0.32cm³/g, still more preferably 0.04 to 0.30cm³/g, particularly preferably 0.06 to 0.28cm³/g, further preferably 0.08 to 0.25cm³/g, more particularly preferably 0.10 to 0.23cm³/g, and still more particularly preferably 0.12 to 0.21cm³/g. The pores having a pore diameter of less than 2 nm are pores that once holds the product gas (water vapor), hardly discharges it. When the pore volume of pores having a pore diameter of less than 2 nm is equal to or less than the upper limit value, it becomes harder to hold the product gas in the porous carbon, and therefore it becomes possible to discharge the product gas well. When the pore volume of pores having a pore diameter of less than 2 nm is equal to or less than the upper limit value, the pore volume of pores having a pore diameter of 2 to 200 nm tends to be high, so that good gas diffusibility is easily exhibited. The pore volume of pores having a pore diameter of less than 2 nm can be adjusted to equal to or more than the lower limit value and equal to or less than the upper limit value or to within the above range by, for example, appropriately adjusting the types and/or the proportions of the carbon source and the calcium compound, or the temperature and/or the time of the heat treatment step (phase separation step and/or carbonization step) in the method for producing porous carbon described later. The pore volume of pores having a pore diameter of less than 2 nm can be determined by analyzing an adsorption isotherm obtained by nitrogen adsorption measurement of porous carbon by the QS-DFT method, and calculating the volume of pores having a pore diameter of less than 2 nm.

### <Specific surface area calculated by BET method>

In one preferred embodiment, the specific surface area calculated from a nitrogen adsorption isotherm of the porous carbon by the BET method is preferably 300 to 1500 m²/g, more preferably 400 to 1400 m²/g, still more preferably 450 to 1300 m²/g, and particularly preferably 500 to 1200 m²/g. When the specific surface area is within the above range, the porous carbon diffuses the reactant gas and the product gas, and tends to have many pores having a pore diameter of 2 to 200 nm suitable for carrying the catalytic metal in a highly dispersed state, and therefore excellent gas diffusibility is easily exhibited. The specific surface area can be adjusted to within the above range by, for example, appropriately adjusting the types and/or the proportions of the carbon source and the calcium compound, or the temperature and/or the time of the heat treatment step (phase separation step and/or carbonization step) in the method for producing porous carbon described later. The specific surface area can be calculated from an approximate straight line of a curve in a relative pressure range of 0.05 or more and 0.1 or less obtained by measuring an adsorption isotherm of the porous carbon, and analyzing the adsorption isotherm by a multipoint method using the BET equation to obtain the curve.

### <Content of calcium>

In one preferred embodiment, the content of calcium in the porous carbon is preferably 20 to 2000 ppm, more preferably 50 to 1500 ppm, and still more preferably 100 to 1000 ppm. When the content of calcium is within the above range, an excessive increase in the mass of the porous carbon is easily inhibited, and the porous carbon tends to be superior in productivity. The content of calcium can be adjusted to within the above range, for example, by appropriately adjusting the conditions of the step of removing the calcium compound (for example, the type and/or the concentration of the acid to be used for the acid washing, the time and/or the temperature of the acid washing, and the like) in the method for producing porous carbon described later.

### <Content of sulfur and content of silicon>

In one preferred embodiment, the contents of sulfur and silicon in the porous carbon are each preferably 1000 ppm or less, and the lower limits thereof are, but are not particularly limited to, 0 ppm. The content of sulfur in the porous carbon is preferably 0 to 1000 ppm, more preferably 0 to 900 ppm, and still more preferably 0 to 800 ppm. In one preferred embodiment, the content of silicon in the porous carbon is preferably 0 to 1000 ppm, more preferably 0 to 900 ppm, and still more preferably 0 to 800 ppm. When the contents of sulfur and silicon are equal to or less than the upper limit values or within the above ranges, an excessive increase in the mass of the porous carbon is easily inhibited, and the porous carbon tends to be superior in productivity. The contents of sulfur and silicon can be adjusted to be equal to or less than the upper limit values, or to within the above range, for example, by appropriately selecting the type of the carbon source in the method for producing porous carbon described later; and/or by appropriately adjusting the conditions of the step of removing the calcium compound (for example, the type and/or the concentration of the acid to be used for the acid washing, the time and/or the temperature of the acid washing, and the like).

The contents of calcium, sulfur and silicon can be measured by fluorescent X-ray analysis.

### <Average primary particle diameter>

The shape of the porous carbon may be, for example, particulate, scaly, layered, flaky, or the like, but is preferably particulate or flaky.

In one preferred embodiment, the porous carbon is preferably particulate.

In this embodiment, the average primary particle diameter of the porous carbon is preferably 500 nm to 5.0 µm, more preferably 600 nm to 4.0 µm, and particularly preferably 700 nm to 3.0 µm. When the average primary particle diameter is within the above range, the contact resistance between particles decreases, and the porous carbon tends to afford an electrode superior in conductivity.

The average primary particle diameter can be adjusted to within the above range, for example, by appropriately selecting the type of the carbon source in the method for producing porous carbon described later; and/or appropriately adjusting the conditions of the pulverizing step, and the like. In the present description, the average primary particle diameter is a particle diameter at which a cumulative volume measured by a laser diffraction/scattering method is 50%. When measurement by the laser diffraction/scattering method is impossible, the average primary particle diameter may refer to an average particle size determined by measuring the particle diameter of primary particles appearing in an electron microscope image and calculating an average value.

### [Method for producing porous carbon]

The porous carbon of the present invention is produced by, for example, a method including:
(1) a step of obtaining a mixture comprising a carbon source and a calcium compound;
(2) a step of heat-treating the mixture in an inert gas atmosphere to phase-separate the carbon source and the calcium compound;
(3) a step of heat-treating the phase-separated mixture in an inert gas atmosphere to obtain a carbonized product;
(4) a step of removing the calcium compound from the carbonized product to obtain porous carbon; and
(5) a step of pulverizing the porous carbon, as necessary.

### <Step (1)>

The carbon source is not particularly limited. From the viewpoint of enhancing compatibility with a calcium compound serving as a pore source, the carbon source is preferably a saccharide. Examples of the saccharide include monosaccharides such as glucose, galactose, mannose, fructose, ribose, and glucosamine; disaccharides such as sucrose, trehalose, maltose, cellobiose, maltitol, lactobionic acid, and lactosamine; and polysaccharides such as starch, cellulose, glycogen, pectin, curdlan, and guar gum. These saccharides may be used singly or two or more saccharides may be used in combination. Among these saccharides, glucose and starch are preferable from the viewpoint of easy production of porous carbon that exhibits excellent gas diffusibility and easy availability in large amounts.

The starch is not particularly limited, and for example, starch derived from corn, cassava, potato, sweet potato, tapioca, bean, wheat, rice, or the like can be used. The amylose content of starch is preferably 50% by mass or less, and more preferably 30% by mass or less with respect to the mass of the starch. The lower the amylose content of starch is, the lower the gelatinization temperature tends to be. Therefore, it is preferable that the amylose content of starch is equal to or less than the upper limit value because gelatinization easily occurs at a low temperature, and compatibility with a calcium compound serving as a pore source easily increases. The amylose content can be determined, for example, by the iodine colorimetric method. The starch may also be a modified starch that has been modified. Examples of the modified starch include etherified starches, esterified starches, cationized starches, and cross-linked starches. Such starches may be used singly or two or more starches may be used in combination. When two or more starches are used in combination, the amylose content is the average amylose content of the starches combined.

The pore source is not particularly limited. From the viewpoint of easily enhancing compatibility with the carbon source, the pore source is preferably a calcium compound. The calcium compound is not particularly limited, and for example, calcium chloride, calcium hydroxide, calcium oxide, calcium carbonate, calcium acetate, calcium fluoride, calcium bromide, calcium iodide, calcium carbide, calcium hydrogencarbonate, calcium nitrate, calcium sulfate, calcium silicate, calcium phosphate, calcium pyrophosphate, calcium gluconate, and calcium lactate, and the like can be used. Among these calcium compounds, a calcium compound having a melting point of 300°C or lower (when the mixture contains water and/or a polyhydric alcohol and/or a carboxylic acid described below, the melting point of the eutectic compound of the calcium compound, the carbon source, and water and/or the polyhydric alcohol and/or the carboxylic acid is 300°C or lower) is preferable from the viewpoint of easily producing porous carbon that exhibits excellent gas diffusibility, and at least one selected from the group consisting of calcium chloride hydrate, calcium hydroxide, calcium oxide, calcium carbonate, and calcium acetate is more preferable. Calcium chloride hydrates include dihydrate, tetrahydrate, and hexahydrate, and any hydrate may be used, but the dihydrate is preferable because it has good reactivity with saccharides.

The mixture including the carbon source and the calcium compound may further include at least one selected from the group consisting of water, a polyhydric alcohol, and a carboxylic acid. When water and/or the polyhydric alcohol and/or the carboxylic acid are included in the mixture, it is considered that the carbon source and the calcium compound are compatibilized with each other via water and/or the polyhydric alcohol and/or the carboxylic acid to form a eutectic compound. Therefore, the melting point of the calcium compound having a melting point of 300°C or higher alone can be made 300°C or lower as the melting point of the eutectic compound. Therefore, the phrase "the melting point of the calcium compound is 300°C or lower" as used herein also includes "the melting point of a eutectic compound of water and/or a polyhydric alcohol and/or a carboxylic acid, a carbon source, and a calcium compound is 300°C or lower". Water is preferable from the viewpoint of easy availability. Examples of the polyhydric alcohol that can be used include glycerin, ethylene glycol, propylene glycol, polyethylene glycol, and polypropylene glycol. Among these polyhydric alcohols, glycerin and ethylene glycol are preferable from the viewpoint of easily dissolving the calcium compound and being easily available in a large amount. Examples of the carboxylic acid that can be used include formic acid, acetic acid, propionic acid, butyric acid, valeric acid, caproic acid, lactic acid, malic acid, citric acid, benzoic acid, phthalic acid, salicylic acid, oxalic acid, malonic acid, succinic acid, glutaric acid, adipic acid, fumaric acid, and maleic acid. Among these carboxylic acids, formic acid and acetic acid are preferable from the viewpoint of easily dissolving the calcium compound and being easily available in a large amount. When two or more compounds selected from among water, one or more polyhydric alcohols, and one or more carboxylic acids are mixed and used, the use ratio of the two or more compounds of water, the polyhydric alcohols, and the carboxylic acid may be appropriately changed according to desired properties of the porous carbon.

The method for mixing the carbon source and the calcium compound, and optionally water, the polyhydric alcohol and/or the carboxylic acid is not particularly limited, and the mixing may be performed by any mixing method.

The amount of the calcium compound to be mixed with the carbon source is preferably 80 to 500 parts by mass, more preferably 130 to 400 parts by mass, and still more preferably 180 to 300 parts by mass per 100 parts by mass of the carbon source. When the amount of the calcium compound is within the above range, the relationship between the mass transfer coefficient and the relative pressure of the resulting porous carbon, and the pore volume of the resulting porous carbon can be rendered suitable.

When the mixture including the carbon source and the calcium compound further includes water and/or a polyhydric alcohol and/or a carboxylic acid, the amount of the water and/or the polyhydric alcohol and/or the carboxylic acid (when two or more selected from among water, one or more polyhydric alcohols, and one or more carboxylic acids are used, the total amount thereof is employed) is preferably 50 to 500 parts by mass, more preferably 100 to 400 parts by mass, and still more preferably 150 to 300 parts by mass per 100 parts by mass of the carbon source. It is noted that when the mixture including the carbon source and the calcium compound does not include the polyhydric alcohol and the carboxylic acid but includes water, the amount of the water is preferably 10 to 500 parts by mass, more preferably 20 to 400 parts by mass, and still more preferably 50 to 300 parts by mass per 100 parts by mass of the carbon source. When the amount of water and/or the polyhydric alcohol and/or the carboxylic acid is within the above range, a eutectic compound is likely to be generated, so that the relationship between the mass transfer coefficient and the relative pressure of the resulting porous carbon, and the pore volume of the resulting porous carbon can be rendered suitable.

### <Step (2)>

In the step (2), the mixture obtained in the step (1) is heat-treated in an inert gas atmosphere to phase-separate the carbon source and the calcium compound.

Examples of the inert gas include nitrogen, argon, and a mixture thereof. The concentration of an oxidizing gas in the gas to be used is preferably as low as possible. The concentration of the oxidizing gas, particularly oxygen, is usually 1% by volume or less, and preferably 0.1% by volume or less with respect to the volume of the gas to be used. When the concentration of the oxidizing gas is equal to or less than the upper limit value, oxidation of the mixture is inhibited, and it is easy to obtain a structure having desired characteristics. In addition, the oxidative decomposition of the generated structure can be inhibited.

The feed amount (flow amount) of the inert gas is usually 200 to 7000 mL/min, preferably 500 to 6000 mL/min, and more preferably 1000 to 5000 mL/min per 1 g of the mixture.

The heat treatment temperature is preferably 150 to 500°C, more preferably 200 to lower than 500°C, still more preferably 240 to 470°C, particularly preferably 250 to 450°C, more particularly preferably higher than 300°C to 420°C, and further particularly preferably higher than 300°C to 400°C.

The present inventors have found that a characteristic pore structure of porous carbon is obtained by subjecting the mixture obtained in step (1) to a heat treatment in an inert gas atmosphere, preferably at a temperature within the above range. The reason is not clear, but the following non-limiting mechanism of action is conceivable.

By the heat treatment, the carbon source and the calcium compound compatible with the carbon source due to hydrogen bonding are phase-separated from each other in the mixture starting from desorption of hydrated water from the mixture or the dehydration reaction of the carbon source. Furthermore, it is considered that as the dehydration reaction of the carbon source proceeds, the carbon source is hardened, and the structure in a state where the carbon source and the calcium compound are phase-separated is fixed. At this time, at least a part of the phase-separated calcium compound (preferably 50% by mass or more, more preferably almost all, or all of the phase-separated calcium compound) is continuously, three-dimensionally connected. In a subsequent carbonization step, the carbon source becomes insoluble in hot water or hot acid as a result of aromatization (carbonization), and in a subsequent calcium compound removal step, the calcium compound is removed from the carbonized product (preferably by washing with an acid). Since the trace resulting from the removal of the calcium compound becomes pores, it is considered that a characteristic pore structure of porous carbon is obtained via the phase separation of the calcium compound by the heat treatment.

The temperature-raising rate in the heat treatment step is preferably 2°C/min or more, and the upper limit value thereof is not particularly limited, but is preferably 200°C/min or less from the viewpoint of easily realizing uniform heat treatment. The temperature-raising rate in the heat treatment step is preferably 2 to 200°C/min, more preferably 5 to 100°C/min, and still more preferably 10 to 50°C/min. When the temperature-raising rate is equal to or more than the lower limit value, it is easy to obtain a desired pore volume and/or a desired mass transfer coefficient.

The heat treatment time is appropriately chosen according to the heat treatment temperature, the feed amount of the inert gas, and the like. The heat treatment time is, for example, 0.1 to 24 hours, preferably 0.2 to 12 hours, more preferably 0.3 to 8 hours, and still more preferably 0.4 to 2 hours. When the heat treatment time is equal to or more than the lower limit value, phase separation tends to sufficiently proceed. It is preferable that the heat treatment time is equal to or less than the upper limit value because it is an appropriate time from the viewpoint of economic efficiency.

As apparatuses to be used for the heat treatment, various furnaces such as a rotary kiln, a fluidized bed furnace, a fixed bed furnace, a moving bed furnace, and a moving floor furnace, and various dryers such as a spray dryer, a mobile dryer, a stirring type dryer, a roll type dryer, and a thin film evaporator can be used. In addition, either a continuous furnace or a continuous dryer that continuously performs the feeding of the substance to be subjected to the heat treatment and the taking out of the substance after the heat treatment, or a batch furnace or a batch dryer that discontinuously performs the feeding of the substance to be subjected to the heat treatment and the taking out of the substance after the heat treatment may be used. The heating means may be any means capable of heating to a prescribed temperature, and may be, for example, electric heating, gas combustion type heating, microwave heating, high-frequency induction heating, and energized heating. These heating means may be used singly or in combination.

### <Step (3)>

In the step (3), the mixture phase-separated in the step (2) is subjected to a heat treatment in an inert gas atmosphere to be carbonized. The heat treatment is preferably performed in two stages, namely, a medium-temperature heat treatment (for example, at 500 to 900°C) and a subsequent high-temperature heat treatment (for example, at 900 to 1300°C).

The medium-temperature heat treatment temperature is preferably 500 to 900°C, more preferably higher than 550°C to 800°C, still more preferably 600 to 750°C, and particularly preferably 650 to 700°C. The high-temperature heat treatment temperature is preferably 900 to 1300°C, more preferably 950°C to 1280°C, still more preferably 1000 to 1250°C, and particularly preferably 1050 to 1200°C. By performing the heat treatment at a medium temperature, the carbon source can be cured without a rapid change in the pore structure. Thereafter, by performing a heat treatment at a high temperature, the crystallinity of carbon can be improved, and porous carbon having high conductivity can be obtained.

The temperature-raising rate in the heat treatment step is preferably 2°C/min or more, and the upper limit value thereof is not particularly limited, but is preferably 200°C/min or less from the viewpoint of easily realizing uniform heat treatment. The temperature-raising rate in the heat treatment step is preferably 2 to 200°C/min, more preferably 5 to 100°C/min, and still more preferably 10 to 50°C/min. When the temperature-raising rate is equal to or more than the lower limit value, it is easy to obtain a desired pore volume.

The heat treatment time is appropriately chosen according to the heat treatment temperature, the feed amount of the inert gas, and the like. The medium-temperature heat treatment time is, for example, 0.5 to 12 hours, more preferably 0.7 to 6 hours, and still more preferably 0.8 to 4 hours. The high-temperature heat treatment time is, for example, 0.5 to 12 hours, more preferably 0.7 to 6 hours, and still more preferably 0.8 to 4 hours. When the heat treatment time is equal to or more than the lower limit value, carbonization tends to sufficiently proceed. It is preferable that the heat treatment time is equal to or less than the upper limit value because it is an appropriate time from the viewpoint of economic efficiency.

The phase separation step in the step (2) and the medium-temperature heat treatment step in the step (3) may be performed simultaneously. Productivity can thereby be improved. For example, the mixture obtained in the step (1) may be subjected to the medium-temperature heat treatment at 500 to 900°C. In this case, in the course of the elevation of temperature in the medium-temperature heat treatment step, the temperature passes through 150 to 500°C, which is a temperature at which phase separation proceeds, so that a desired pore structure can be obtained. To promote the phase separation, it is required to reduce the temperature-raising rate to be used until the temperature reaches a medium temperature. Specifically, the temperature-raising rate is preferably 2 to 100°C/min, more preferably 5 to 50°C/min, and still more preferably 10 to 30°C/min from the viewpoint of achieving both promotion of the phase separation structure and improvement of productivity. The heat treatment time in this case is, for example, 0.5 to 12 hours, preferably 0.7 to 6 hours, and more preferably 0.8 to 4 hours. It is noted that from the viewpoint of promoting the phase separation structure, the phase separation step in the step (2) and the medium-temperature heat treatment step in the step (3) are preferably performed each independently.

As the inert gas, the feed amount thereof, and the furnace to be used for the heat treatment, those equivalent to those in the step (2) may be adopted.

### <Step (4)>

In the step (4), the calcium compound is removed from the carbonized product obtained. Porous carbon can thereby be obtained.

The removal of the calcium compound is preferably performed by acid washing. Examples of the acid to be used for the acid washing include hydrochloric acid, sulfuric acid, and nitric acid. Hydrochloric acid is preferable from the viewpoint of easily dissolving metal compounds in the carbonized product, hardly allowing impurities such as sulfur to remain, and easily inhibiting oxidation of the carbonized product. The concentration of the acid during the acid washing may be appropriately changed depending on the type of the acid to be used. For example, when hydrochloric acid is used, the concentration of hydrochloric acid is preferably 0.01 to 1.0 mol/L, and more preferably 0.05 to 0.5 mol/L. It is preferable that the concentration of hydrochloric acid is within the above range because metal compounds are easily removed, and hydrochloric acid hardly remains in the carbonized product.

The pH of the acid at the time of the acid washing may be appropriately changed depending on the type, concentration, temperature, and the like of the acid to be used. The pH of the acid is preferably 3 or less, and more preferably 2.5 or less. When the pH of the acid is equal to or less than the upper limit value, it is easy to remove metal compounds efficiently.

The acid washing may be performed, for example, by immersing the resulting carbonized product in the acid. When the acid washing is performed by immersion in the acid, the mass ratio of the acid to the carbonized product may be appropriately adjusted according to the type, concentration, temperature, and the like of the acid to be used. The mass of the carbonized product to be immersed with respect to the mass of the acid is preferably 2 to 50% by mass, and more preferably 5 to 30% by mass. When the mass ratio of the carbonized product to be immersed to the mass of the acid is within the above range, a sufficient cleaning effect is easily obtained.

The method for immersing the carbonized product in the acid is not particularly limited. It may be a method in which immersion is performed while an acid is continuously added, retained for a prescribed time, and then drained, or a method in which the carbonized product is immersed in the acid, retained for a prescribed time, and deliquored, and then a fresh acid is added, and such immersion and deliquoring are repeated. In addition, either a method in which the entire acid is renewed or a method in which a part of the acid is renewed may be used. In addition, the acid may be stirred during immersion.

The atmosphere in which the acid washing is performed is not particularly limited, and may be appropriately selected according to the method to be used for washing. The acid washing is usually conducted in an air atmosphere.

The time for immersing the carbonized product in the acid can be appropriately adjusted according to the acid to be used, the treatment temperature, and the like. The time for immersing the carbonized product in the acid is preferably 5 to 60 minutes, more preferably 10 to 40 minutes, and still more preferably 15 to 35 minutes. When the time is equal to or more than the lower limit value, metal compounds are easily removed sufficiently, whereas when the time is equal to or less than the upper limit value, good productivity can be secured.

After the acid washing of the carbonized product, the acid in the porous carbon is preferably removed by water washing. The acid washing and the water washing may be repeatedly performed until the calcium compound in the porous carbon can be removed to a desired degree. In addition, the temperature of the solution at the time of acid washing and water washing is preferably as high as possible from the viewpoint of the efficiency of removing the calcium compound and the residual acid, and is usually 60°C or higher.

As one embodiment of the present invention, it is preferable to perform acid washing between the medium-temperature heat treatment and the high-temperature heat treatment of the phase-separated mixture. For example, the mixture phase-separated in the step (2) is preferably subjected to the medium-temperature heat treatment (for example, at 500 to 900°C), then acid-washed, and then subjected to the high-temperature heat treatment (for example, at 900 to 1300°C).

As one embodiment of the present invention, when the phase separation step in the step (2) and the medium-temperature heat treatment step in the step (3) are performed simultaneously, it is preferable to perform acid washing between the phase separation step in the step (2) and the medium-temperature heat treatment step in the step (3) that are performed simultaneously, and the high-temperature heat treatment.

In these embodiments, a change in the pore structure associated with dissolution of the carbon source by acid washing hardly occurs because the carbon source is infusibilized by the medium-temperature heat treatment before washing for the removal of the calcium compound.

The porous carbon after the acid washing and the water washing may be subjected to a drying treatment using a publicly-known dryer such as a hot air dryer or a vacuum dryer. The drying is preferably performed at a temperature of 50 to 150°C. It is preferable that the drying temperature is within this range because oxidation of the porous carbon hardly occurs, and drying proceeds appropriately.

As necessary, the porous carbon after the step (4) may be pulverized, and in one embodiment, the porous carbon is preferably pulverized. By the pulverization, the shape, particle diameter, and so on of the finally obtained porous carbon can be controlled to a desired shape, particle diameter, and so on. The pulverization method is not particularly limited. For example, publicly-known pulverizers such as a ball mill, a centrifugal roll mill, a ring roll mill, a centrifugal ball mill, a jet mill, a cone crusher, a double roll crusher, a disk crusher, and a rotary crusher may be used singly or in combination.

The method for producing porous carbon may further include a classification step after the pulverization step. For example, porous carbon having a narrow particle size distribution width can be obtained by removing particles that are extremely smaller or larger than a desired particle diameter. The classification method is not particularly limited. Examples of the classification method include classification using a sieve, wet classification, and dry classification. Examples of a wet classifier include classifiers using such principles as gravity classification, inertial classification, hydraulic classification, and centrifugal classification. Examples of a dry classifier include classifiers using such principles as sedimentation classification, mechanical classification, and centrifugal classification. From the viewpoint of economic efficiency, it is preferable to use a dry classifier.

To prevent oxidation of the surface during pulverization, the pulverization step and the classification step are preferably performed in an inert gas atmosphere.

The pulverization and the classification may be performed using a single apparatus. For example, the pulverization and the classification can be performed using a jet mill equipped with a dry classification function. Furthermore, an apparatus in which a pulverizer and a classifier are independent from each other may be used. In this case, the pulverization and the classification may be continuously performed, but the pulverization and the classification may also be discontinuously performed.

### <Fuel cell catalyst>

The porous carbon of the present invention can be suitably used as a carrier of a fuel cell catalyst due to the characteristic pore structure of the porous carbon. The porous carbon can satisfactorily discharge water vapor generated by a chemical reaction (reduction reaction) on the cathode, and can smoothly supply oxygen as a reactant gas to the catalytic metal carried on the porous carbon. Therefore, a fuel cell catalyst comprising the porous carbon of the present invention and a catalytic metal, wherein the porous carbon carries the catalytic metal can achieve low concentration overvoltage in a fuel cell. The fuel cell comprising the fuel ionization catalyst may have improved output characteristics due to the fuel cell catalyst providing a low concentration overvoltage.

As the catalytic metal in the anode, a publicly-known catalyst can be used without particular limitation as long as it has a catalytic action for the oxidation reaction of hydrogen. A publicly-known catalyst can be used also as the catalytic metal in the cathode without particular limitation as long as it has a catalytic action for the reduction reaction of oxygen. Specific examples of the catalytic metal include metals such as platinum, ruthenium, iridium, rhodium, palladium, osmium, tungsten, lead, iron, copper, silver, chromium, cobalt, nickel, manganese, vanadium, molybdenum, gallium, and aluminum, and alloys thereof, and one kind or two or more kinds thereof can be used. The catalytic metal is preferably platinum or a platinum-containing alloy because it has high catalytic activity.

The shape and size of the catalytic metal are not particularly limited, and the same shape and size as those of publicly-known catalyst components can be adopted. The shape may be, for example, particulate, scaly, layered, or the like, but is preferably particulate. At this time, the average particle size (diameter) of the catalytic metal is preferably 0.3 to 30 nm, and more preferably 1 to 10 nm.

The loading amount of the catalyst on the catalyst carrier is preferably 0.05 to 80% by mass, more preferably 0.1 to 60% by mass, and still more preferably 0.5 to 40% by mass based on the total mass of the catalyst carrier and the catalytic metal. When the loading amount of the catalyst is within the above range, a sufficient amount of the catalyst is carried, and a large amount of catalytic metal functioning as a catalyst is present, so that the catalyst carrier carrying the catalytic metal is preferable because it can be used as a catalyst having high utilization efficiency.

The method for making the catalyst carrier carry the catalytic metal is not particularly limited. Examples of publicly-known suitable methods include a noble metal acetylacetonate method using a noble metal acetylacetonate and a colloid method using a noble metal colloid, and both of the methods are preferable.

A method involving precipitating a catalytic metal on the surface of a catalyst carrier and then performing a heat treatment to increase the particle size of the catalytic metal is preferably employed.

### <Fuel cell>

A fuel cell is generally configured as follows. Catalyst layers each containing a carbon material carrying a platinum-group metal catalyst and an ion conductive binder composed of a polymer electrolyte are formed on both sides of a polymer electrolyte membrane having proton conductivity. On the outer side of each of the catalyst layers, a gas diffusion layer made of a porous material that allows a fuel gas and an oxidant gas to pass through is formed. As the gas diffusion layer, carbon paper, carbon cloth, or the like is used. A structure in which a gas diffusion layer is disposed on a catalyst layer is called a gas diffusion electrode, and a structure in which a pair of gas diffusion electrodes is bonded to an electrolyte membrane such that each catalyst layer faces the electrolyte membrane is a membrane-electrode assembly (MEA; Membrane Electrode Assembly). Separators having conductivity and airtightness are disposed on both sides of the membrane-electrode assembly. A gas flow path for supplying a fuel gas or an oxidant gas (for example, air) to the electrode surface is formed in a contact portion between the membrane-electrode assembly and the separator or in the separator. A fuel gas such as hydrogen or methanol is supplied to one electrode (fuel electrode), and an oxidant gas containing oxygen such as air is supplied to the other electrode (oxygen electrode), whereby power is generated. That is, in the fuel electrode, the fuel is ionized to generate protons and electrons. The protons pass through the electrolyte membrane. The electrons move through an external electric circuit formed by connecting both electrodes, are sent to the oxygen electrode, and react with the oxidant to generate water. In this way, the chemical energy of the fuel can be directly converted into electrical energy, which is then extracted.

The porous carbon of the present invention can satisfactorily discharge water vapor generated by a chemical reaction (reduction reaction) on the cathode, and can smoothly supply oxygen as a reactant gas to the catalytic metal carried on the porous carbon. Therefore, the fuel cell comprising the porous carbon of the present invention as a carbon material of a catalyst layer can achieve a low concentration overvoltage. The fuel cell comprising the fuel ionization catalyst may have improved output characteristics due to the fuel cell catalyst providing a low concentration overvoltage.

The fuel cell comprising the fuel cell catalyst of the present invention can be manufactured in accordance with a publicly-known method for manufacturing a fuel cell using a publicly-known material of the fuel cell except for using the fuel cell catalyst of the present invention.

### Examples

Hereinafter, the present invention is described specifically by way of Examples, but these do not limit the scope of the present invention.

### [Method for analyzing porous carbon]

### <Mass transfer coefficient by nitrogen adsorption method>

Porous carbon as a measurement sample was filled in a sample tube. The sample tube was placed in "Autosorb-iQ-MP" manufactured by Quantachrome Instruments, Inc., and once depressurized in a state of being cooled to -196°C, and then the measurement sample was allowed to adsorb nitrogen (purity: 99.999%) at a prescribed relative pressure. The amount of the nitrogen adsorbed to the sample when the equilibrium pressure was reached at each prescribed relative pressure was measured, and an adsorption isotherm was produced.

A mass transfer coefficient was determined by analyzing the data of the produced nitrogen adsorption isotherm. Specifically, the change in pressure of nitrogen until reaching the adsorption equilibrium at each prescribed relative pressure was converted into a mass transfer coefficient using LDF approximation. At this time, the conversion into a mass transfer coefficient was conducted such that the number of plots in the relative pressure range of 1.0 × 10⁻⁴ or more and 1.0 × 10⁻³ or less was at least five.

A graph was produced with the relative pressure (P/P₀) on the x-axis and the mass transfer coefficient on the y-axis. An approximate straight line was drawn in the relative pressure range of 1.0 × 10⁴ or more and 1.0 × 10⁻³ or less, and the slope (a) thereof and the mass transfer coefficient (b) at a relative pressure of 1.0 × 10⁻³ were determined.

### <Volume of pores sized 2 nm or more and 200 nm or less and mode diameter determined by nitrogen adsorption method>

The nitrogen adsorption isotherm obtained as described above was analyzed by the BJH method, and the volume of pores having a pore diameter of 2 nm or more and 200 nm or less was calculated.

In addition, the nitrogen adsorption isotherm obtained as described above was analyzed by the BJH method, and a logarithmic differential pore volume distribution [dV/d(log D)] obtained by differentiating the cumulative pore volume (V) with the common logarithm of the pore diameter (D) was thereby determined. The pore diameter having the largest appearance ratio was adopted as the mode diameter of the measurement sample.

### <Specific surface area>

The nitrogen adsorption isotherm obtained as described above was analyzed by a multipoint method using the BET equation. From the approximate straight line of the obtained curve in the relative pressure range of 0.05 or more and 0.1 or less, the specific surface area of the measurement sample was calculated.

### <Bulk density>

The bulk density of the measurement sample was measured using Powder Tester PT-X manufactured by Hosokawa Micron Corporation. Specifically, a measurement sample was charged into an automatic tapped density measurement unit, and the bulk density was calculated from the volume after 3000 taps.

### <Average primary particle diameter>

A sample was charged into an aqueous solution containing 5% by mass of a surfactant ("Toriton X100" sold by Wako Pure Chemical Industries, Ltd.), and treated with an ultrasonic cleaner for 10 minutes or more to be dispersed in the aqueous solution. Using this dispersion, the particle size distribution was measured by a particle diameter/particle size distribution analyzer ("Microtrac MT3300 EXII" manufactured by MicrotracBEL Corp.). The particle size at which the cumulative volume was 50% was taken as the average primary particle diameter of the sample porous carbon.

### [Example 1]

### <Production of porous carbon>

One gram of glucose (sold by FUJIFILM Wako Pure Chemical Corporation), 2 g (200 parts by mass per 100 parts by mass of glucose) of calcium chloride dihydrate, and 1 g (100 parts by mass per 100 parts by mass of glucose) of deionized water were mixed. The resulting mixture was heated to 350°C at a temperature-raising rate of 20°C/min under a nitrogen gas flow of 1250 mL/min per gram of the mixture, and heat-treated (phase-separated) at that temperature for 30 minutes. Subsequently, while a nitrogen gas was circulated in the same gas feed amount, the mixture was heated to 700°C at a temperature-raising rate of 10°C/min and heat-treated at that temperature for 60 minutes, affording a carbonized product. The carbonized product was washed by immersion in 0.2 L of 0.1 mol/L hydrochloric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C. The carbonized product after hot air drying and 12 mL of deionized water were mixed, and the resulting mixture was subjected to pulverization with a ball mill for 10 minutes. While a nitrogen gas was circulated in the same gas feed amount as described above, the carbonized product after the pulverization was heated to 1200°C at a temperature-raising rate of 10°C/min and heat-treated 60 minutes, affording porous carbon.

### <Preparation of fuel cell catalyst>

On the produced porous carbon, Pt catalyst particles as electrode catalyst particles were carried by the platinum acetylacetonate method. A Pt precursor (Pt(C₅H₇O₂)₂) was dissolved in dichloromethane (3 mL) such that the amount of Pt per 100 mg of the porous carbon was 35% by mass. The resulting solution was added to an round-bottom flask containing 100 mg of the porous carbon. Subsequently, the porous carbon was dispersed in the solution for 30 minutes using an ultrasonic stirrer while icecooling the round-bottom flask. While being further heated to 50°C, the mixture was stirred until all the solvent was volatilized, affording a light yellow powder. The powder obtained was subjected to a reduction treatment by heat treatment at 210°C for 3 hours and further at 240°C for 3 hours in a nitrogen atmosphere, affording a fuel cell catalyst.

### <Preparation of membrane-electrode assembly (MEA)>

As an electrolyte membrane, a Nafion membrane (thickness: 50 µm) was employed. Pt/C (TANAKA PRECIOUS METAL TECHNOLOGIES Co., Ltd., TEC10E50E) was dispersed in a mixed solvent containing a Nafion dispersion solution (5% Nafion (registered trademark) dispersion solution DE521 CS type manufactured by FUJIFILM Wako Chemical Corporation), water, and ethanol at a volume ratio of 100 : 53 : 480 to prepare a dispersion for anode formation containing Pt/C in an amount of 46% by mass based on the total amount of the dispersion. The obtained dispersion was spray-printed on a Nafion membrane such that the amount of Pt in the anode was 0.3 mg/cm², and the solvent was removed by drying on a hot plate at 60°C, whereby an anode (electrode catalyst layer) was prepared on the Nafion membrane.

Next, a dispersion for cathode formation was prepared by the same method as the method for the dispersion for anode formation except that the fuel cell catalyst described above was used instead of Pt/C (TANAKA PRECIOUS METAL TECHNOLOGIES Co., Ltd., TEC10E50E). The obtained dispersion for cathode formation was spray-printed on the opposite side of the Nafion membrane with the anode having been formed such that the amount of Pt in the cathode was 0.3 mg/cm², and the solvent was removed by drying on a hot plate at 60°C, whereby a cathode (electrode catalyst layer) was prepared on the Nafion membrane. Thereafter, the anode, the Nafion membrane, and the cathode were pressure-bonded at 0.3 kN and 130°C, and sandwiched between two sheets of water-repellent carbon paper (manufactured by Toray Industries, Inc., model number: EC-TP1-060T) serving as gas diffusion layers, affording an MEA.

### <Concentration overvoltage>

As shown in Fig. 2, the concentration overvoltage (ηₘₜ) is an overvoltage calculated by subtracting the activation overvoltage (ηₐ) from the non-ohmic overvoltage (ηₙₒₙ₋ₒₕₘ) calculated by subtracting the ohmic overvoltage (ηₒₕₘ) from the difference between the theoretical electromotive force (Eᵣₑᵥ) and the operating potential. Here, the ohmic overvoltage is also referred to as IR loss (η_{IR}), and is a voltage drop caused by the electric resistance of an electrode and the resistance to a flow of electrolyte ions. The activation overvoltage is a voltage drop when the activation energy is consumed due to the advance of the hydrogen oxidation reaction at the anode and the oxygen reduction reaction at the cathode. The concentration overvoltage is a voltage drop caused by insufficient supply of oxygen as a reactant to the electrode surface due to retention of water vapor as a reaction by-product. Among these three overvoltages, the concentration overvoltage was used as an index for evaluation of the porous carbon for a catalyst carrier because the characteristics of the porous carbon for a catalyst carrier affected the concentration overvoltage.

As the current density is larger, the required oxygen supply amount becomes larger, and as a result, the water vapor discharge amount becomes larger, and thus, it becomes hard to supply oxygen and discharge water vapor, so that the ratio of the concentration overvoltage to the entire overvoltage becomes large. Accordingly, the value of the concentration overvoltage at a current density of 700 [mA/cm²], which is relatively high, was adopted as an index for evaluation of the porous carbon for a catalyst carrier.

The ohmic overvoltage, the activation overvoltage, and the concentration overvoltage can be separated in accordance with the test name: I-V measurement method - overvoltage separation analysis method (in the present description, this may be referred to as "NEDO protocol test method") described in the cell evaluation protocol (NEDO PEFC cell evaluation analysis protocol: 2023) of New Energy and Industrial Technology Development Organization (NEDO).

Specific procedures are shown in (1) to (4) below. (i) to (iii) and (v) to (vi) are steps corresponding to the steps [1] to [3] and [5] to [6] described in the NEDO protocol test method. Step [4] in the NEDO protocol test method is a step of calculating the activation overvoltage and does not directly contribute to the calculation of the concentration overvoltage, and thus is omitted here.
(1) I-V measurement was performed on the MEA in accordance with the conditions described in the NEDO protocol test method.
(2) The theoretical electromotive force was calculated in accordance with the NEDO protocol test method.
(3) From the ohmic resistance obtained by a publicly-known AC impedance method, an ohmic overvoltage was calculated in accordance with the following (v).
   (v) Current density (A/cm²) × internal resistance value (Ω·cm²) at the point to be analyzed was defined as a resistance overvoltage (synonymous with ohmic overvoltage).
(4) The concentration overvoltage was calculated in accordance with the following (i) to (iii) and (vi) using the ohmic overvoltage calculated in (3).
   (i) On the basis of the I-V measurement data measured in (1), a Tafel plot was created with the horizontal axis representing the current density (logarithmic axis) and the vertical axis representing the IR-free voltage (the value obtained by adding the ohmic overvoltage to the operating potential).
   (ii) An equation of a regression line was determined from the values of three to four points having linearity on the low current density side.
   (iii) The value of the current density at the point to be analyzed was substituted as x in the equation, and the voltage y on the regression equation was determined.
   (vi) The difference between the value of the voltage y and the IR-free voltage value on the regression equation at the current density x was defined as a diffusion overvoltage (synonymous with concentration overvoltage).

A more detailed procedure is described below.

### <Procedure (1)>

Ajig for evaluation of single-cell power generation (manufactured by Japan FC Planning Co., Ltd.) incorporating an MEA was installed in a thermostatic bath set at 80°C, and I-V measurement was performed under the following conditions. For the I-V measurement, a fuel cell evaluation apparatus (AutoPEM-KUG2 manufactured by TOYO Corporation) and a potentiostat/galvanostat (SP-240 manufactured by BioLogic Inc.) were used.

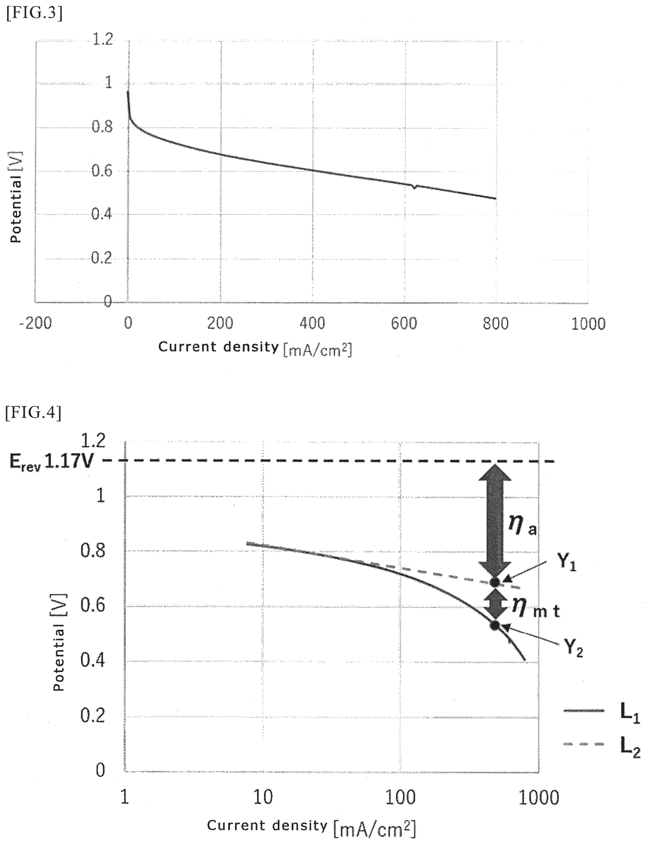

As one example, the I-V curve obtained by the I-V measurement of the MEA prepared in Example 1 is shown in Fig. 3. The operating potential at a current density of 700 [mA/cm²] was 0.514 [V].

### (Anode conditions)

Electrode area: 1 cm²
Supplied gas type: 100% H₂
Gas supply rate: 139 mL/min
Supplied gas humidification temperature: 80°C (relative humidity: 98%) (Cathode conditions)
Electrode area: 1 cm²
Supplied gas type: air
Gas supply rate: 332 mL/min
Supplied gas humidification temperature: 80°C (relative humidity: 98%)

### <Procedure (2)>

The theoretical electromotive force E_{rev(PH2}, _{PO2}, _{T}) was calculated by substituting the test conditions, namely, T = 80°C (353 K), (PH₂/PH*₂) = 1.0, and (PO₂/PO*₂) = 0.21 into the following equation described in the NEDO protocol test method, and it was found to be 1.17 [V]. [Math 1] $\begin{matrix}{E}_{rev \left(P{H}_{2},P{0}_{2},T\right)} = 1.23 - 0.9 \times {10}^{- 3} \left(T-298\right) + \frac{2.303 RT}{4 F} \\ \times log {\left[\left(\frac{P {H}_{2}}{P {H}_{2}^{∗}}\right)\left(\frac{P {O}_{2}}{P {O}_{2}^{∗}}\right)\right]}_{P {H}_{2}^{∗} = P {O}_{2}^{∗} = 101.3 kPa} \\ For the theoretical electromotive force calculation , the \\ following values were applied to the above equation . \\ T = 80 ° C \left(353 K\right) . \left(P{H}_{2}/P∗{H}_{2}\right) = 1.0 . \left(P{O}_{2}/P∗{O}_{2}\right) = 0.21 \\ R represents a gas constant \\ F is a Faraday constant\end{matrix}$

### <Procedure (3)>

The AC impedance was measured under the following conditions, and the ohmic resistance was measured.
(AC impedance measurement conditions)
Applied current density: 20 ± 2 [mA/cm²]
Frequency: 100 [kHz] to 100 [MHz]

The ohmic resistance in Example 1 was 0.0875 [Ω·cm²]. From the obtained ohmic resistance, an ohmic overvoltage was calculated in accordance with (v) of the NEDO protocol test method.

The ohmic overvoltage (0.0613 [V]) was calculated by multiplying the current density of 0.700 [A/cm²] at the point to be analyzed by the internal resistance value of 0.0875 [Ω·cm²].

### <Procedure (4)>

(i) On the basis of the I-V measurement data measured in (1), a Tafel plot was created with the horizontal axis representing the current density (logarithmic axis) and the vertical axis representing the IR-free voltage. The Tafel plot of the MEA prepared in Example 1 is shown in Fig. 4 (L₁ in Fig. 4).
(ii) An equation of a regression line was determined from the values of three to four points having linearity on the low current density side. The equation of the regression line (L₂ in Fig. 4) in Example 1 is as follows: [Math 2] $y = A ⋅ ln \left(x\right) + B$ wherein A = -0.0360, B = 0.908.
(iii) The current density of 700 [mA/cm²] was substituted as x in the equation, and the voltage y on the regression equation was thereby determined. The value of the voltage y (Y₁ in Fig. 4) at a current density x = 700 [mA/cm²] in Example 1 was 0.672 [V].

### <Procedure (5)>

(vi) The concentration overvoltage was determined from the difference between the value of the voltage y (Y₁ in Fig. 4) and the IR-free voltage value (Y₂ in Fig. 4) on the regression equation at a current density x (700 [mA/cm²]). The concentration overvoltage ((ηₘₜ) in Fig. 4) at a current density x = 700 [mA/cm²] in Example 1 was 0.672 - (0.514 + 0.0613) = 0.0967 (V).

### [Example 2]

A fuel cell catalyst and an MEA were produced in the same manner as in Example 1 except that the amount of calcium chloride dihydrate was changed to 1 g (100 parts by mass based on 100 parts by mass of glucose).

### [Example 3]

A fuel cell catalyst and an MEA were produced in the same manner as in Example 1 except that the carbon source was changed to 0.5 g of glucose (sold by FUJIFILM Wako Pure Chemical Corporation) and 0.5 g of cellulose (sold by FUJIFILM Wako Pure Chemical Corporation), the amount of calcium chloride dihydrate was changed to 3 g (300 parts by mass based on 100 parts by mass of the carbon source), and the amount of deionized water was changed to 1.5 g.

### [Comparative Example 1]

A fuel cell catalyst and an MEA were produced in the same manner as in Example 1 except that Ketjen black manufactured by Lion Specialty Chemicals Co., Ltd. was used as a catalyst carrier.

### [Comparative Example 2]

One gram of polyvinyl alcohol (PVA) and 4 g (400 parts by mass based on 100 parts by mass of PVA) of magnesium citrate (sold by FUJIFILM Wako Pure Chemical Corporation) were mixed. The resulting mixture was heated to 700°C at a temperature-raising rate of 10°C/min in a nitrogen gas atmosphere, and heat-treated at that temperature for 60 minutes, affording a carbonized product. Thereafter, the resulting carbonized product was washed by immersion in 0.2 L of 1 mol/L sulfuric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C. The carbonized product after hot air drying was further heated to 1200°C in a nitrogen gas atmosphere, and then heat-treated (calcined) for 60 minutes, affording porous carbon. A fuel cell catalyst and an MEA were produced in the same manner as in Example 1 except for the differences described above.

Physical properties of the porous carbons and fuel cell catalysts in Examples and Comparative Examples are shown in Table 1. The porous carbons obtained in Examples 1 to 3 and Comparative Examples 1 to 2 were particulate.

**[Table 1]**

| Table 1: Physical properties of porous carbon and fuel cell catalyst | | | | | | | | | |
|---|---|---|---|---|---|---|---|---|---|
| | | Approximate straight line of mass transfer coefficient | | 2 to 200 nm pore volume [cm³/g] | Mode diameter [nm] | Average primary particle diameter [µm] | Bulk density [g/cm³] | Specific surface area [m²/g] | Concentration overvoltage of 700 mA/cm² [V] |
| | | (a) | (b) [sec⁻¹] | | | | | | |
| Example | 1 | 3.76 | 4.1×10⁻³ | 2.34 | 14 | 1.4 | 0.04 | 871 | 0.0967 |
| | 2 | 3.11 | 3.8×10⁻³ | 1.78 | 13 | 1.5 | 0.05 | 702 | 0.0909 |
| | 3 | 2.63 | 3.1×10⁻³ | 2.01 | 32 | 1.5 | 0.05 | 652 | 0.1032 |
| Comparative Example | 1 | 2.32 | 2.4×10⁻³ | 3.88 | 147 | 0.04 | 0.06 | 1376 | 0.1123 |
| | 2 | 0.967 | 9.8×10⁻⁴ | 1.91 | 4 | 57 | 0.17 | 1503 | 0.1327 |

### INDUSTRIAL APPLICABILITY

The porous carbon of the present invention can provide a low concentration overvoltage when used as a catalyst carrier in a fuel cell. Therefore, the porous carbon of the present invention can be suitably used as a fuel cell catalyst carrier.

## Claims

1. Porous carbon for a fuel cell catalyst carrier, wherein a slope of an approximate straight line obtained by converting a change in pressure of nitrogen until reaching an adsorption equilibrium at each prescribed relative pressure in measurement of a nitrogen adsorption isotherm into a mass transfer coefficient using LDF approximation and linearly approximating a relationship between a relative pressure and a mass transfer coefficient at a relative pressure of 1.0 × 10⁻⁴ or more and 1.0 × 10⁻³ or less is 2.5 or more.

2. The porous carbon according to claim 1, wherein a pore volume of pores having a pore diameter of 2 nm or more and 200 nm or less calculated from the nitrogen adsorption isotherm by the BJH method is 0.8 cm³/g or more.

3. The porous carbon according to claim 1, wherein a mass transfer coefficient at a relative pressure of 1.0 × 10⁻³ is 3.0 × 10⁻³ sec⁻¹ or more on the approximate straight line.

4. The porous carbon according to claim 1, wherein an average primary particle diameter is 500 nm to 5 µm.

5. The porous carbon according to claim 1, wherein the porous carbon has a bulk density of less than 0.10 g/cm³.

6. A fuel cell catalyst comprising the porous carbon according to claim 1 and a catalytic metal, wherein the porous carbon carries the catalytic metal.

7. A fuel cell comprising the fuel cell catalyst according to claim 6.
